# EUROPÄISCHE PATENTANMELDUNG

(11) **EP 0 601 276 A1**
(43) Veröffentlichungstag der Anmeldung: **15.06.1994**
(21) Anmeldenummer: 93112729.4
(22) Anmeldetag: 09.08.1993
(51) Int. Cl.: C22B 3/42, C23F 1/46

(54) **Verfahren zur Überführung von Kupfer aus kupferhaltigen Abwässern in die verbrauchte Kupferchlorid-Ätze aus der Leitenplattenfertigung**

(30) Priorität: 05.12.1992 DE 4241080
(71) Anmelder: GÜTLING GMBH, D-70736 Fellbach (DE)
(72) Erfinder: Schwering, Hans Ulrich, Dr., D-71229 Leonberg (DE)
(74) Vertreter: KOHLER SCHMID + PARTNER

(57) **Zusammenfassung**

Bei einem Verfahren zur Rückgewinnung von Kupfer aus kupfersalzhaltiger Lösung, bei dem ein selektiv arbeitendes Ionenaustauscherharz (2) in einem Ionenaustauschbehälter durch Zufuhr einer wässrigen, kupfersalzhaltigen Vorlagelösung mit Kupfer beladen und anschließend das am Ionenaustauscherharz gebundene Kupfer mit einer stark säurehaltigen Lösung wieder herausgewaschen und das Ionenaustauscherharz regeneriert wird, wobei die säurehaltige Lösung das von der Vorlagelösung stammende, zumeist alkalisalzhaltige Abwasser aus dem Ionenaustauschbehälter (2) verdrängt, wird als Vorlagelösung kupferhaltiges Abwasser von Verkupferungsverfahren, beispielsweise Vorspülwasser oder verbrauchtes Wirkbad aus der Leiterplattenfertigung, und als stark säurehaltige Lösung zum Regenerieren des Ionenaustauscherharzes verbrauchte kupferhaltige Kupferchlorid-Ätze (CuCl₂ + HCl), die vorzugsweise ebenfalls aus der Leiterplattenfertigung stammt, verwendet. Dadurch wird die altätze mit den aus dem Abwasser entzogenen Kupferionen angereichert und somit wertvoller, während das Abwasser entkupfert wird und daher nicht mehr zu kupferhaltigem Schlamm verarbeitet werden muß, der als Sondermüll teuer entsorgt werden müßte.

## Beschreibung

Die Erfindung betrifft ein Verfahren zur Rückgewinnung von Kupfer aus kupfersalzhaltiger Lösung, bei dem ein selektiv arbeitendes Ionenaustauscherharz in einem Ionenaustauschbehälter durch Zufuhr einer wässrigen, kupfersalzhaltigen Vorlagelösung mit Kupfer beladen und anschließend das am Ionenaustauscherharz gebundene Kupfer mit einer stark säurehaltigen Lösung wieder herausgewaschen und das Ionenaustauscherharz regeneriert wird, wobei die säurehaltige Lösung das von der Vorlagelösung stammende, zumeist alkalisalzhaltige Abwasser aus dem Ionenaustauschbehälter verdrängt.

Ein solches Verfahren ist beispielsweise bekannt aus L. Hartinger, Handbuch der Abwasser- und Recyclingtechnik, Carl Hanser Verlag München Wien, 1991, Seiten 441 ff.

Derartige Verfahren zur Rückgewinnung von Kupfer werden großtechnisch zum Recycling von kupferhaltigen wässrigen Lösungen in der Leiterplattenfertigung eingesetzt. Dabei werden an Anionen gebundene Kupferkationen, beispielsweise CuCl₂, CuSO₄ usw. in einem schwachsaueren Charboxylharzbett gegen andere Kationen, beispielsweise Natriumionen ausgetauscht. Sobald eine bestimmte Menge von Kupferionen im Ionenaustauscherharz gebunden ist, ist das letztere gestättigt und läßt bei weiterer Zufuhr von kupfersalzhaltiger Vorlagelösung die Kupferionen ungehindert durch, so daß diese ins Abwasser gelangen würden. Daher wird an diesem Punkt die Zufuhr von weiterer Vorlagelösung in das Ionenaustauscherharz unterbrochen und eine Regenerierung des Harzes zunächst mit säurereicher und meist kupferarmer sogenannter Schnittlösung und später mit frischer Säure, beispielsweise H₂SO₄ oder HCl regeneriert. Dabei wird das an dem Ionenaustauscherharz angelagerte Kupfer gelöst und verläßt in Form von beispielsweise angereicherter Kupfersulfat- oder Kupferchloridlösung den Ionenaustauscher.

Anschließend wird das Harzbett mit Wasser gespült und danach mit einer Lauge, beispielsweise NaOH konditioniert. Das eingeleitete Waschwasser verdrängt dabei die in dem Ionenaustauschbehälter befindliche Säure in Richtung auf den Schnittbehälter mit der Schnittlösung und die nachfolgende Lauge verdrängt das Waschwasser in Richtung auf den Vorlagebehälter. Sämtliche Beschickungsvorgänge des Ionenaustauschbehälters erfolgen dabei in der Regel im Abstrom, also von oben nach unten, damit das Harzbett nicht aufgewühlt, sondern zusammengepreßt wird.

Die oben beschriebenen bekannten Verfahren zur Kupferrückgewinnung können jedoch wirtschaftlich nur dann eingesetzt werden, wenn der Kupfergehalt der zu behandelnden Abwässer einen bestimmten Schwellwert überschreitet. Schwach kupferhaltige Abwässer wie Vorspülwässer vom Reinigen, Beizen und Mikroätzen sowie verbrauchte Wirkbäder vom Verkupfern der Leiterplatten, die eine geringere Kupferkonzentration aufweisen, werden bislang mit anderen Abwässern vermischt und zu kupferhaltigen Schlämmen verarbeitet, die als teurer Sondermüll entsorgt werden müssen. Dabei geht nicht nur das hochwertige Buntmetall Kupfer verloren, sondern die Entsorgung dieser schwach kupferhaltigen Abwässer im Endeffekt als Sondermüll ist zusätzlich noch besonders kostenintensiv.

Aufgabe der vorliegenden Erfindung ist es daher, ein Verfahren zur Rückgewinnung von Kupfer aus kupfersalzhaltigen Lösungen der eingangs beschriebenen Art vorzustellen, bei dem auch für schwach kupferhaltige Abwässer aus Verkupferungsverfahren, beispielsweise aus der Leiterplattenfertigung, keine Entsorgungskosten anfallen, sondern im Gegenteil der wertvolle Rohstoff Kupfer zu einem möglichst hohen Grad zurückgewonnen wird.

Erfindungsgemäß wird diese Aufgabe dadurch gelöst, daß als Vorlagelösung kupferhaltiges Abwasser von Verkupferungsverfahren, beispielsweise Vorspülwasser oder verbrauchtes Wirkbad aus der Leiterplattenfertigung, und als stark säurehaltige Lösung zum Regenerieren des Ionenaustauscherharzes verbrauchte stark kupferhaltige Kupferchlorid-Ätze (CuCl₂ + HCl), die vorzugsweise ebenfalls aus der Leiterplattenfertigung stammt, verwendet wird.

Auch bisher schon wurde die verbrauchte stark kupferhaltige Kupferchlorid-Ätze, die bei Abätzvorgängen in der Leiterplattenfertigung anfällt, als Wirtschaftsgut entsorgt. Dabei richtet sich der erzielbare Preis für die Altätze nach der Höhe des Kupfergehalts. Üblicherweise enthält die aus der Leiterplattenfertigung anfallende Kupferchloridätze ca. 100 g/l an CuCl₂ und etwa ebensoviel HCl. Durch das erfindungsgemäße Verfahren wird nunmehr die Altätze mit weiteren Kupferionen aus den diversen kupferhaltigen Abwässern vom Verkupfern der Leiterplatten angereichert. Im Ionenaustauschbehälter lagert sich das Kupfer aus dem als Vorlagelösung zugeführten kupferhaltigen Abwasser am Ionenaustauscherharz an und wird durch die nachfolgende Regeneration mit der verbrauchten Kupferchlorid-Ätze von der letzteren aus dem Harz wieder herausgewaschen, so daß deren Kupfergehalt steigt, während das den Ionenaustauschbehälter verlassende Abwasser im wesentlichen von Kupfer befreit ist.

Dadurch werden gewissermaßen "zwei Fliegen mit einer Klappe erschlagen":
Die schwachkupferhaltigen Abwässer aus den Verkupferungsvorgängen sind vom Kupfer befreit und werden nicht zu kostenintensivem Sonderabfall in Form von kupferhaltigem Schlamm. Die verbrauchte Kupferchlorid-Ätze aus den Abätzvorgängen hingegen wird durch eine Erhöhung ihres Kupfergehalts "veredelt" und kann zu einem höheren Preis verkauft werden. Es werden also einerseits Kosten eingespart und andererseits sogar noch zusätzliche Gewinne erzielt.

Bei Anwendung des erfindungsgemäßen Verfahrens lassen sich etwa Kupferchlorid-Konzentrationen von 160 g/l und Salzsäurekonzentrationen von 40 g/l in der verbrauchten Kupferchlorid-Ätze erreichen. Im Endeffekt werden durch das Verfahren die Kupferbestandteile aus den schwach kupferhaltigen Abwässern mit beliebigen Anionen (meist Sulfationen) zu Kupferchlorid in der verbrauchten Ätze konvertiert und können als hochwertigeres Wirtschaftsgut verkauft werden.

Das Kupferrecycling aus den kupferhaltigen Abwässern kann mit dem erfindungsgemäßen Verfahren je nach Bedarf vollständig oder nur bis zu einem wirtschaftlich sinnvollen Grad betrieben werden:

Bei einer Ausführungsform des erfindungsgemäßen Verfahrens erfolgt die Zufuhr von Vorlagelösung in den Ionenaustauschbehälter solange, bis in der aus dem Ionenaustauschbehälter austretenden Flüssigkeit eine bestimmte Konzentration an Kupferionen erreicht ist. Bei weiterer Zufuhr von Vorlagelösung würde nun zu viel Kupfer im abfließenden Abwasser verlorengehen, so daß an diesem Punkt eine Regeneration des Ionenaustauscherharzes eingeleitet wird.

Um den kritischen Punkt für einen unerwünschten "Kupferdurchbruch" rechtzeitig zu erkennen, wird bei einer Ausführungsform des erfindungsgemäßen Verfahrens die Konzentration an Kupferionen in dem aus dem Ionenaustauschbehälter verdrängten Abwasser photometrisch überwacht.

Bei einer Weiterbildung dieser Ausführungsform wird das Abwasser, dessen Konzentration an Kupferionen einen vorgegebenen Wert überschreitet, nach Regeneration des Ionenaustauscherharzes wieder dem Ionenaustauschbehälter zugeführt. Dadurch wird sichergestellt, daß nicht zu viel von dem wertvollen Rohstoff Kupfer aus dem Prozeß verlorengeht und ins Abwasser gelangt.

Bei einer besonders bevorzugten Ausführungsform der Erfindung werden im Betriebszyklus beim Betrieb der Konvertierungstauscheranlage folgende Schritte durchlaufen:
a) Beladen des Ionenaustauscherharzes mit Kupfer durch Zufuhr von Vorlagelösung aus einem Vorlagebehälter (3) und Verdrängen der im Ionenaustauschbehälter (2) befindlichen Flüssigkeit in einen Abwasserbehälter (32);
b) Verdrängen von Wasser aus dem Ionenaustauschbehälter (2) in den Vorlagebehälter (3) durch Zufuhr von verbrauchter Kupferchlorid-Ätze aus einem Altätzebehälter (4);
c) Regenerieren des mit Kupfer beladenen Ionenaustauscherharzes durch Zufuhr von frischer Salzsäure aus einem Säurebehälter (5) und Verdrängen der im Ionenaustauschbehälter (2) befindlichen Flüssigkeit teilweise in den Altätzebehälter (4) und teilweise in einen Behälter (31) zur Aufnahme von mit Kupferchlorid hochangereicherter Ätze;
d) Waschen des Ionenaustauschbehälters (2) durch Zufuhr von Wasser aus einem Wasserbehälter (6) und Verdrängen der im Ionenaustauschbehälter (2) befindlichen Flüssigkeit in den Altätzebehälter (4);
e) Konditionierung des regenerierten Ionenaustauscherharzes durch Zufuhr von frischer Lauge aus einem Laugenbehälter (7) und Verdrängen des im Ionenaustauschbehälter (2) befindlichen Wassers in den Vorlagebehälter (3).

Bei einer bevorzugten Variante des erfindungsgemäßen Verfahrens wird in Schritt c) eine erste Flüssigkeitsmenge aus dem Ionenaustauschbehälter, vorzugsweise etwa das erste Drittel, in den Altätzebehälter, eine zweite Flüssigkeitsmenge, vorzugsweise etwa das mittlere Drittel, in den Behälter von mit Kupferchlorid hochangereicherter Ätze und schließlich eine dritte Flüssigkeitsmenge, vorzugsweise etwa das letzte Drittel, wieder in den Altätzebehälter verdrängt. Dadurch kann die Konzentration an kupferhaltiger Lösung, die in den Behälter zur Aufnahme von hochangereicherter Kupferchlorid-Ätze abfließt, besonders hoch gehalten werden.

Bei einer weiteren bevorzugten Verfahrensvariante wird in Schritt d) eine erste Flüssigkeitsmenge aus dem Ionenaustauschbehälter, vorzugsweise die Hauptmenge, in den Altätzebehälter und eine weitere Flüssigkeitsmenge, vorzugsweise eine geringe Restmenge, in den Vorlagebehälter verdrängt. Damit kann sichergestellt werden, daß die Säurekonzentration im Altätzebehälter nicht verdünnt wird.

Eine besonders bevorzugte Variante des erfindungsgemäßen Verfahrens besteht darin, daß die in den Schritten b) bis e) dem Ionenaustauschbehälter zugeführten Flüssigkeiten mit Hilfe einer Druckluft-Membranpumpe gefördert werden und in jeweils vorbestimmten Volumenmengen, die durch Hubzählung der Druckluft-Membranpumpe mittels einer Zähleinrichtung abgemessen werden, in den Ionenaustauschbehälter eingespeist werden, wobei die Zumessung durch entsprechende Ansteuerung von Ventilen über eine Steuereinrichtung aufgrund der jeweiligen Hubzahl der Druckluft-Membranpumpe erfolgt.

Im Falle einer im wesentlichen zeitlich konstanten Konzentration der Vorlagelösung erfolgt gemäß einer Variante des erfindungsgemäßen Verfahrens auch die Zufuhr von Vorlagelösung in den Ionenaustauschbehälter in Schritt a) in einer vorbestimmten hubzahlgesteuerten Volumenmenge. Bei schwankenden Konzentrationen der Vorlagelösung erfolgt eine Zufuhr von Vorlagelösung in den Ionenaustauschbehälter in Schritt a), wie bereits oben beschrieben, solange, bis in der aus dem Ionenaustauschbehälter austretenden Flüssigkeit eine bestimmte Konzentration an Kupferionen überschritten wird.

Bei einer bevorzugten Variante des erfindungsgemäßen Verfahrens wird die Druckluft-Membranpumpe bei der Förderung konzentrierter Lösungen langsamer als bei der Förderung verdünnter Lösungen betrieben, weil gerade bei konzentrierten Lösungen eine besonders genaue Zumessung wünschenswert ist.

Bei einer besonders bevorzugten Ausführungsform des erfindungsgemäßen Verfahrens werden zwei Ionenaustauschbehälter in Reihenwechselschaltung verwendet und im Gegentakt regeneriert, wobei beim Beladen des Ionenaustauscherharzes die Vorlagelösung zunächst in den Ionenaustauschbehälter, dessen Ionenaustauscherharz im vorletzten Takt regeneriert worden ist, danach in den Ionenaustauschbehälter mit dem zuletzt regenerierten Ionenaustauscherharz geleitet wird. Auf diese Weise kann auch bei größerem Anfall von aufzuarbeitenden kupferhaltigen Abwässern, insbesondere bei kontinuierlich betriebenen Verfahren der aus dem ersten Ionenaustauscherbehälter austretende "Schlupf" an nicht rückgewonnenen Kupferionen im zweiten, frisch regenerierten Ionenaustauschbehälter abgefangen und vollständig dem Abwasser entzogen werden.

Da bei den diversen Prozeßschritten beim Verkupfern von Leiterplatten möglicherweise unterschiedliche Kupfersalze in den verschiedenen Abwässern anfallen, kann es zweckmäßig sein, das erfindungsgemäße Verfahren so zu betreiben, daß die Vorlagelösung beliebige Anionen enthält. Das Verfahren kann dann kontinuierlich betrieben werden. Eine andere Möglichkeit besteht darin, die kupferhaltigen Abwässer sortenrein zu erfassen und fraktioniert dem Konvertierungstauscher zuzuführen.

Bei einer weiteren, sehr vorteilhaften Variante des erfindungsgemäßen Verfahrens erfolgt die Beschickung des Ionenaustauschbehälters nicht wie üblich nur von oben nach unten im Abstrom, sondern angepaßt an die jweiligen spezifischen Gewichte der beteiligten Flüssigkeiten auch von unten nach oben im Aufstrom. Beispielsweise in Schritt b) verdrängt die spezifisch schwerere Kupferchlorid-Ätze das spezifisch leichtere Wasser von unten nach oben im Harzbehälter. Im Schritt c) hingegen wird die gegenüber der eingeleiteten Säure spezifisch schwerere Altätze im Abstrom von oben nach unten verdrängt. Allgemein wird bei dieser Variante des erfindungsgemäßen Verfahrens eine spezifisch leichtere durch eine spezifisch schwerere Flüssigkeit im Aufstrom und eine spezifisch schwerere von einer spezifisch leichteren Flüssigkeit im Abstrom verdrängt. Dadurch wird eine Vermischung der Flüssigkeiten weitgehend unterdrückt, da immer sichergestellt ist, daß die spezifisch schwerere Flüssigkeit unter der spezifisch leichteren liegt. Auf diese Weise wird eine wesentlich bessere Trennung der unterschiedlichen Flüssigkeiten, also erheblich steilere Flanken im Elutionsdiagramm erreicht, was zu höheren Konzentrationen des erwünschten Produkts bzw. der Zwischenflüssigkeiten führt.

Die Erfindung wird im folgenden anhand der in der Zeichnung dargestellten Ausführungsbeispiele näher beschrieben und erläutert. Die der Beschreibung und der Zeichnung zu entnehmenden Merkmale können bei anderen Ausführungsformen einzeln, für sich oder zu mehreren in beliebigen Kombinationen Anwendung finden.

Es zeigen:
- Fig.1: ein vereinfachtes Reaktionsschema für das erfindungsgemäße Verfahren; und
- Fig.2: ein Funktionsschema einer Konvertierungstauscheranlage zur Durchführung des erfindungsgemäßen Verfahrens.

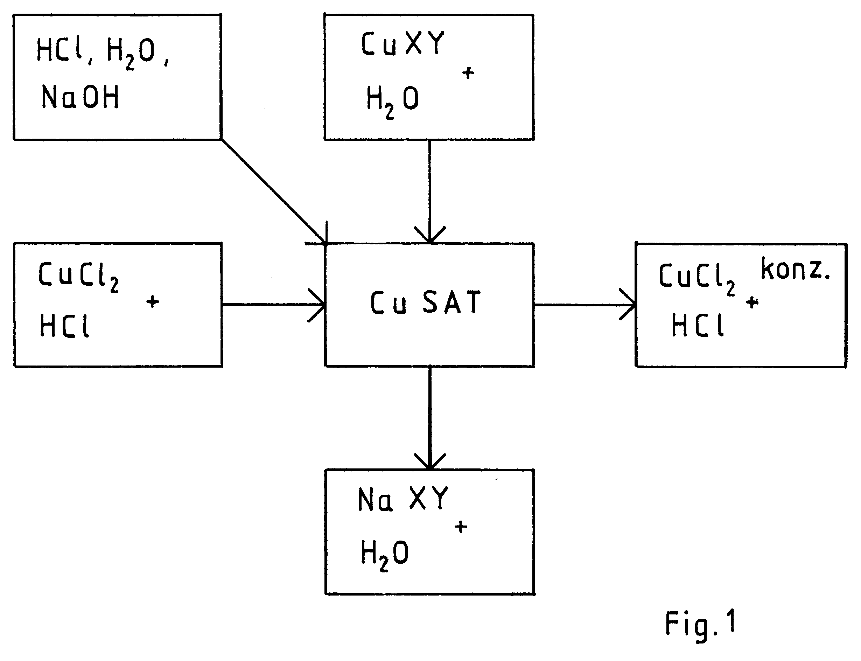

Das Blockdiagramm von Fig. 1 zeigt schematisch, wie beim erfindungsgemäßen Verfahren in einem Konvertierungstauscher mit selektiv arbeitendem Ionenaustauscherharz (CuSAT) einerseits eine Vorlagelösung mit kupferhaltigem Abwasser, das diverse Kupfersalze (CuXY + H₂O) enthält, und andererseits verbrauchte, kupferhaltige Kupferchlorid-Ätze (CuCl₂ + HCl) zugeführt wird. Als Ausgangsprodukte treten aus dem Konvertierungstauscher einerseits mit Kupferionen hoch angereicherte Kupferchorid-Ätze (CuCl₂ konz. + HCl) aus, die als Wirtschaftsgut zu einem vom Kupferanteil abhängigen höheren Preis verkauft werden kann, während andererseits eine alkalisalzhaltige, in der Regel natriumsalzhaltige wässrige Lösung (NaXY + H₂O) als Abwasser den Konvertierungstauscher verläßt. Ein solches alkalisalzhaltiges Abwasser kann dann durch weitere Behandlung zu Frischwasser wiederaufbereitet werden. Dabei entstehen Kosten, die um Gößenordnungen niedriger als die Kosten für die Entsorgung von kupferhaltigen Schlämmen liegen, die üblicherweise bei einer konventionellen Entsorgung der kupferhaltigen Abwässer aus der Leiterplattenfertigung anfallen. Schließlich sind in dem Hochdiagramm auch die Verfahrensschritte des Regenerierens von beladenem Ionenaustauscherharz mit frischer Salzsäure, Spülen des Harzes mit Wasser und Konditionieren des Harzes mit Natronlauge (HCl, H₂O, NaOH) stark schematisiert angedeutet.

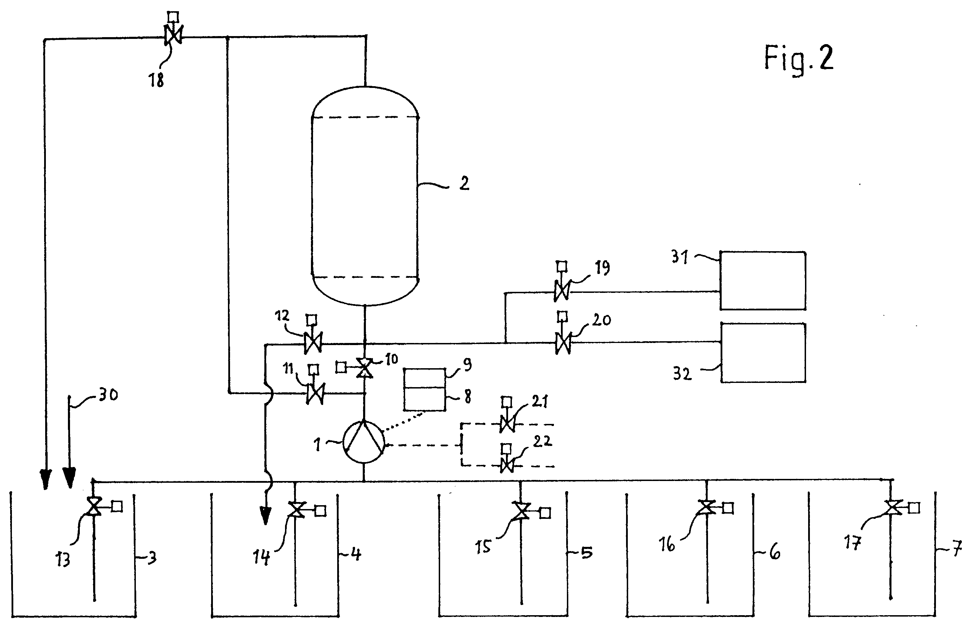

Bei der in Fig. 2 gezeigten Konvertierungstauscheranlage werden die Flüssigkeitsströme über ein Rohrleitungsnetz mit ansteuerbaren Flüssigkeitsventilen 10 bis 20 durch eine Pumpe 1, vorzugsweise eine Druckluft-Membranpumpe 1 gefördert. An die Druckluft-Membranpumpe 1 ist eine Zähleinrichtung 8 zur Zählung der Hübe der Druckluft-Membranpumpe 1 angeschlossen, die ein der Anzahl der Hübe entsprechendes Signal an die Steuereinrichtung 9 zur Steuerung der Volumenströme in der Konvertierungstauscheranlage weitergibt. Die Zähleinrichtung 8 kann ein elektronisches Zählwerk mit mehreren, mindestens jedoch vier abspeicherbaren diskreten Hubwerten umfassen. Im Programmablauf während des Betriebs der Konvertierungstauscheranlage zählt dann die Zähleinrichtung 8 jeweils die Hübe der Druckluft-Membranpumpe 1 bis zu einem der vorgegebenen Hubwerte, gibt dann ein Steuersignal an die Steuereinrichtung 9 ab, die daraufhin durch Umschalten von einigen der Ventile 10 bis 20 den nächsten Betriebsschritt einleitet. Die Zähleinrichtung 8 setzt sich dann selbständig auf Null zurück und zählt bis zum nächsten diskret abgespeicherten Hubwert hoch, woraufhin sie wiederum ein Steuersignal an die Steuereinrichtung 9 zur Einleitung des folgenden Betriebsschrittes abgibt.

Die Druckluft-Membranpumpe 1 kann mit Druckluft von unterschiedlichem Druck schneller bzw. langsamer betrieben werden. Im gezeigten Beispiel sind zwei Druckluftleitungen vorgesehen, die jeweils mit einem der Druckluftventile 21 bzw. 22 geöffnet oder geschlossen werden können, und die nach den Druckluftventilen 21, 22 und vor der Druckluft-Membranpumpe 1 in eine gemeinsame Luftzufuhrleitung zur Druckluft-Membranpumpe 1 münden. Wird nun der Druckluft-Membranpume 1 Luft mit höherem Druck zugeführt, so läuft die Pumpe schneller als bei Zufuhr von Luft mit geringerem Druck. Auf diese Weise kann die Hubgeschwindigkeit der Druckluft-Membranpumpe 1 gesteuert werden.

Die Geschwindigkeitsumschaltung der Druckluft-Membranpumpe 1 je nach Betriebsschritt kann automatisch mit Hilfe der Steuereinrichtung 9 aufgrund der aktuellen, von der Zähleinrichtung 8 an die Steuereinrichtung 9 weitergegeben Hubzahl erfolgen, wenn die Druckluftventile 20, 21 ansteuerbar und mit der Steuereinrichtung 9 entsprechend verbunden sind.

Auch die ansteuerbaren Flüssigkeitsventile 10 bis 20 sind entsprechend mit der Steuereinrichtung 9 verbunden, was der Einfachheit halber jedoch in Fig. 2 nicht explizit dargestellt ist.

Beim Betrieb der Anlage wird einem Vorlagebehälter 3 über einen Zulauf 30 eine kupfersalzhaltige Vorlagelösung, beispielsweise gelöstes Kupfersulfat oder Kupferchlorid in wässriger Lösung zugeführt. Mit Hilfe der Konventierungstauscheranlage soll nun eine möglichst quantitative Rückgewinnung des in der Vorlage enthaltenden Kupfers, das in der Regel von Verkupferungsprozessen aus der Leiterplattenfertigung kommt, erreicht werden.

Dazu werden in einem ersten Schritt über die Steuereinrichtung 9 die Flüssigkeitsventile 11 und 13 geöffnet, während die Ventile 10, 12 und 14 bis 20 geschlossen bleiben. Mit Hilfe der Druckluft-Membranpumpe 1 wird nun aus dem Vorlagebehälter 3 Vorlageflüssigkeit von oben im Abstrom in einen Ionenaustauschbehälter 2, der selektiv arbeitendes Ionenaustauscherharz, beispielsweise Carboxylharz oder Chelatharz enthält, gefördert. Da die Vorlagelösung nicht besonders hochkonzentriert ist, kann die Druckluft-Membranpumpe 1 beim ersten Schritt mit großer Geschwindigkeit laufen.

Das geschärfte Ionenaustauscherharz nimmt nun aus der zugeleiteten Vorlagelösung das darin enthaltene Kupfer bis zur Sättigungsgrenze auf. Falls die über den Zulauf 30 in den Vorlagebehälter 3 gelangende Vorlagelösung keinen größeren Konzentrationsschwankungen unterworfen ist, kann bereits im ersten Schritt über die Hubzahl der Druckluft-Membranpumpe 1 eine genaue Mengenzumessung der in den Ionenaustauschbehälter 2 geförderten Vorlagelösung vorgenommen werden, so daß gerade die Sättigungsgrenze des Harzbettes mit den zugeführten Kupferionen erreicht wird. Die diesem kritischen Volumen entsprechende erforderliche Hubzahl der Druckluft-Membranpumpe 1 braucht lediglich einmal vor Betriebsbeginn empirisch festgestellt und in der Zähleinrichtung 8 abgespeichert werden.

Falls jedoch die Konzentrationsverhältnisse in der Vorlagelösung stark schwanken, erfolgt die Zufuhr von Vorlagelösung in den Ionenaustauschbehälter 2 im ersten Schritt nicht hubgesteuert, sondern solange, bis in der aus dem Ionenaustauschbehälter 2 austretenden Flüssigkeit eine bestimmte Konzentration von Kupferionen überschritten wird. Dies kann im Falle von Kupfer-Ionen, die bekanntlich gefärbt sind, mit Hilfe eines Photometers überwacht werden.

In einem zweiten Betriebsschritt wird dann das im Ionenaustauschbehälter 2 befindliche Wasser im Aufstrom von unten nach oben mit Hilfe von spezifisch schwererer, säurereicher, verbrauchter Kupferchlorid-Ätze aus einem Altätzebehälter 4 in Richtung auf den Vorlagebehälter 3 verdrängt. Dazu werden über die Steuereinrichtung 9 die Ventile 11 und 13 geschlossen, während die Ventile 10, 14 und 18 geöffnet werden.

Da die Altätzelösung, wie erwähnt, spezifisch schwerer ist als das Wasser im Ionenaustauschbehälter 2, das sie verdrängen soll, ist es besonders günstig, wenn diese Verdrängung im Aufstrom erfolgt. Dadurch wird eine Vermischung von Altätze und zu verdrängendem Wasser weitgehend unterdrückt, weil ja die spezifisch schwerere Flüssigkeit immer unter der spezifisch leichteren liegt. Aus diesem Grund ist auch eine unerwünschte Anhebung und Durchwirbelung des Harzbettes im Ionenaustauschbehälters 2 nicht zu befürchten.

Im dritten Betriebsschritt wird das nunmehr mit Kupfer beladene Ionenaustauscherharz durch Zufuhr von frischer Salzsäure aus einem Säurebehälter 5 regeneriert. Dazu werden die Flüssigkeitsventile 10, 14 und 18 geschlossen, und die Ventile 11, 15 geöffnet, so daß die spezifisch schwerere Säure von oben im Abstrom durch die Ionenaustauscher 2 geleitet wird und die darin befindliche, spezifisch schwerere, kupferhaltige Flüssigkeit nach unten verdrängt.

Da die Kupferkonzentration der im Ionenaustauschbehälter 2 befindlichen Flüssigkeit ungefähr im mittleren Drittel des Ionenaustauschbehälters 2 am höchsten ist, wird, vorzugsweise ebenfalls hubgesteuert, das unterste abfließende Drittel der Flüssigkeit dem Altätzebehälter 4 zugeführt, während das mittlere Drittel in einem Behälter 31 zur Aufnahme von mit Kupferchlorid hochkonzentrierter Ätze eingeleitet wird. Im restlichen Drittel der Flüssigkeitsäule aus dem Ionenaustauschbehälter 2 schließlich herrscht wieder eine geringere Kupferionenkonzentration und eine höhere Säurekonzentration. Daher wird diese Restmenge ebenfalls wieder dem Altätzebehälter 4 zugeführt.

Der dritte Betriebsschritt sollte in jedem Fall aufgrund der beteiligten hochkonzentrierten Salzsäure mit der geringstmöglichen Hubgeschwindigkeit der Druckluft-Membranpumpe 1 ablaufen.

Im vierten Betriebsschritt wird der Ionenaustauschbehälter 2 durch Zufuhr von Wasser aus einem Wasserbehälter 6 in einem schnelleren Betriebsmodus der Druckluft-Membranpume 1 gewaschen. Die Zufuhr des Waschwassers, das spezifisch leicher als die im Ionenaustauschbehälter 2 befindliche Salzsäure ist, erfolgt im Abstrom von oben in den Ionenaustauschbehälter 2. Der Hauptanteil des Flüssigkeitsvolumens im Ionenaustauschbehälters 2 ist in diesem Betriebszustand eine säurereiche, kupferarme Lösung, die dem Altätzebehälter 4 zugeführt wird. Um eine Verdünnung der Altätze mit Wasser zu vermeiden, kann eine geringe Restmenge der aus dem Ionenaustauschbehälter 2 verdrängten Flüssigkeitssäule am Ende des vierten Betriebsschritts in den Vorlagebehälter 3 eingeleitet werden. Dazu müssen die Flüssigkeitsventile 10, 11 und 18 geöffnet und sämtliche anderen Flüssigkeitsventile geschlossen werden.

In einem fünften Betriebsschritt schließlich wird das nunmehr regenerierte Ionenaustauscherharz durch Zufuhr von frischer Lauge aus einem Laugenbehälter 7 im Aufstom von unten in den Ionenaustauschbehälter 2 regeneriert. Dabei verdrängt die spezifisch schwerere Lauge, meist Natronlauge, das im Ionenaustauschbehälter 2 befindliche, spezifisch leichtere Wasser von unten nach oben. Das verdrängte Wasser, das möglicherweise auch Kupferionen enthalten kann, kann entweder dem Vorlagebehälter 3 zugeführt werden. Falls jedoch die darin befindliche Kupfermenge wegen einer zu geringen Konzentration nicht mehr regenerationswürdig ist, kann das verdrängte Wasservolumen über die Flüssigkeitsventile 11, 10 und 20 zur weiteren Entsorgung einem Abwasserbehälter 32 zugeführt werden.

Da zumindest die Konzentrationen der Kupferchlorid-Ätze im Altätzebehälter 4, der konzentrierten Salzsäure im Säurebehälter 5, des Waschwassers im Wasserbehälter 6 und der Lauge im Laugenbehälter 7 während des gesamten Prozesses höchstens geringfügigen Schwankungen unterworfen sind, können die Zumessungen der genannten Flüssigkeiten in den Ionenaustauschbehälter 2 im jeweiligen Betriebsschritt in jedem Fall hubzahlgesteuert vorgenommen werden. Dadurch können zumindest in diesen Fällen umständliche und störanfällige Füllstandsmeßeinrichtungen zur Abmessung der entsprechenden Volumina eingespart werden.

Das erfindungsgemäße Verfahren kann auch in einem Konvertierungstauscher mit zwei Ionenaustauschbehältern in Reihenwechselschaltung betrieben werden. Die beiden Ionenaustauschbehälter werden dann im Gegentakt regeneriert, und beim Beladen des Ionenaustauscherharzes wird die Vorlagelösung zunächst in denjenigen Ionenaustauschbehälter, dessen Ionenaustauscherharz im vorletzten Takt regeneriert worden ist, danach in den Ionenaustauschbehälter mit dem zuletzt regenerierten Ionenaustauscherharz gleitet. Dadurch können auch größere Mengen von anfallendem kupferhaltigem Abwasser kontinuierlich aufgearbeitet werden, wobei der jeweils frischregenerierte, an zweiter Stelle geschaltete Ionenaustauscher den Schlupf an Kupferionen, die den ersten Ionenaustauscher verlassen, auffängt, so daß der erste Ionenaustauscher bis weit über die Sättigungsgrenze beladen werden kann.

## Patentansprüche

1. Verfahren zur Rückgewinnung von Kupfer aus kupfersalzhaltiger Lösung, bei dem ein selektiv arbeitendes Ionenaustauscherharz in einem Ionenaustauschbehälter durch Zufuhr einer wässrigen, kupfersalzhaltigen Vorlagelösung mit Kupfer beladen und anschließend das am Ionenaustauscherharz gebundene Kupfer mit einer stark säurehaltigen Lösung wieder herausgewaschen und das Ionenaustauscherharz regeneriert wird, wobei die säurehaltige Lösung das von der Vorlagelösung stammende, zumeist alkalisalzhaltige Abwasser aus dem Ionenaustauschbehälter verdrängt,
dadurch gekennzeichnet,
daß als Vorlagelösung kupferhaltiges Abwasser von Verkupferungsverfahren, beispielsweise Vorspülwasser oder verbrauchtes Wirkbad aus der Leiterplattenfertigung, und als stark säurehaltige Lösung zum Regenerieren des Ionenaustauscherharzes verbrauchte stark kupferhaltige Kupferchlorid-Ätze (CuCl₂ + HCl), die vorzugsweise ebenfalls aus der Leiterplattenfertigung stammt, verwendet wird.

2. Verfahren nach Anspruch 1, dadurch gekennzeichnet, daß die Zufuhr von Vorlagelösung in den Ionenaustauschbehälter (2) solange erfolgt, bis in der aus dem Ionenaustauschbehälter (2) austretenden Flüssigkeit eine bestimmte Konzentration an Kupferionen erreicht ist.

3. Verfahren nach Anspruch 1 oder 2, dadurch gekennzeichnet, daß die Konzentration an Kupferionen in dem aus dem Ionenaustauschbehälter (2) verdrängten Abwasser photometrisch überwacht wird.

4. Verfahren nach Anspruch 3, dadurch gekennzeichnet, daß das Abwasser, dessen Konzentration an Kupferionen einen vorgegebenen Wert überschreitet, nach der Regeneration des Ionenaustauscherharzes wieder dem Ionenaustauschbehälter (2) zugeführt wird.

5. Verfahren nach einem der vorhergehenden Ansprüche, dadurch gekennzeichnet, daß im Betriebszyklus folgende Schritte durchlaufen werden:
a) Beladen des Ionenaustauscherharzes mit Kupfer durch Zufuhr von Vorlagelösung aus einem Vorlagebehälter (3) und Verdrängen der im Ionenaustauschbehälter (2) befindlichen Flüssigkeit in einen Abwasserbehälter (32);
b) Verdrängen von Wasser aus dem Ionenaustauschbehälter (2) in den Vorlagebehälter (3) durch Zufuhr von verbrauchter Kupferchlorid-Ätze aus einem Altätzebehälter (4);
c) Regenerieren des mit Kupfer beladenen Ionenaustauscherharzes durch Zufuhr von frischer Salzsäure aus einem Säurebehälter (5) und Verdrängen der im Ionenaustauschbehälter (2) befindlichen Flüssigkeit teilweise in den Altätzebehälter (4) und teilweise in einen Behälter (31) zur Aufnahme von mit Kupferchlorid hochangereicherter Ätze;
d) Waschen des Ionenaustauschbehälters (2) durch Zufuhr von Wasser aus einem Wasserbehälter (6) und Verdrängen der im Ionenaustauschbehälter (2) befindlichen Flüssigkeit in den Altätzebehälter (4);
e) Konditionierung des regenerierten Ionenaustauscherharzes durch Zufuhr von frischer Lauge aus einem Laugenbehälter (7) und Verdrängen des im Ionenaustauschbehälter (2) befindlichen Wassers in den Vorlagebehälter (3).

6. Verfahren nach Anspruch 5, dadurch gekennzeichnet, daß in Schritt c) eine erste Flüssigkeitsmenge aus dem Ionenaustauschbehälter (2), vorzugsweise etwa das erste Drittel, in den Altätzebehälter (4), eine zweite Flüssigkeitsmenge, vorzugsweise etwa das mittlere Drittel, in den Behälter (31) und schließlich eine dritte Flüssigkeitsmenge, vorzugsweise etwa das letzte Drittel, in den Altätzebehälter (4) verdrängt wird.

7. Verfahren nach Anspruch 5 oder 6, dadurch gekennzeichnet, daß in Schritt d) eine erste Flüssigkeitsmenge aus dem Ionenaustauschbehälter (2), vorzugsweise die Hauptmenge, in den Altätzebehälter (4) und eine weitere Flüssigkeitsmenge, vorzugsweise eine geringe Restmenge, in den Vorlagebehälter (3) verdrängt wird.

8. Verfahren nach einem der Ansprüche 5 bis 7, dadurch gekennzeichnet, daß die in den Schritten b) bis e) dem Ionenaustauschbehälter (2) zugeführten Flüssigkeiten mit Hilfe einer Druckluft-Membranpumpe (1) gefördert werden und in jeweils vorbestimmten Volumenmengen, die durch Hubzählung der Druckluft-Membranpumpe (1) mittels einer Zähleinrichtung (8) abgemessen werden, in den Ionenaustauschbehälter (2) eingespeist werden, wobei die Zumessung durch entsprechende Ansteuerung von Ventilen (10 bis 20) über eine Steuereinrichtung (9) aufgrund der jeweiligen Hubzahl der Druckluft-Membranpumpe (1) erfolgt.

9. Verfahren nach Anspruch 8, dadurch gekennzeichnet, daß im Falle einer im wesentlichen konstanten Konzentration der Vorlagelösung auch die Zufuhr von Vorlagelösung in den Ionenaustauschbehälter (2) in Schritt a) in einer vorbestimmten, hubzahlgesteuerten Volumenmenge erfolgt.

10. Verfahren nach einem der Ansprüche 8 oder 9, dadurch gekennzeichnet, daß die Druckluft-Membranpumpe (1) bei der Förderung konzentrierter Lösungen langsamer als bei der Förderung verdünnter Lösungen betrieben wird.

11. Verfahren nach einem der Ansprüche 1 oder 5 bis 10, dadurch gekennzeichnet, daß zwei Ionenaustauschbehälter in Reihenwechselschaltung verwendet werden, die im Gegentakt regeneriert werden, und daß beim Beladen des Ionenaustauscherharzes die Vorlagelösung zunächst in den Ionenaustauschbehälter, dessen Ionenaustauscherharz im vorletzten Takt regeneriert worden ist, danach in den Ionenaustauschbehälter mit dem zuletzt regenerierten Ionenaustauscherharz geleitet wird.

12. Verfahren nach einem der vorhergehenden Ansprüche, dadurch gekennzeichnet, daß die Vorlagelösung beliebige Anionen enthält.

13. Verfahren nach einem der vorhergehenden Ansprüche, dadurch gekennzeichnet, daß im Verhältnis zu der im Ionenaustauschbehälter (2) befindlichen Flüssigkeit spezifisch leichtere Flüssigkeiten dem Ionenaustauschbehälter (3) von oben im Abstrom, spezifisch schwerere Flüssigkeiten von unten im Aufstrom zugeführt werden.
